# DEMANDE DE BREVET EUROPEEN

(11) **EP 1 295 660 A1**
(43) Date de publication de la demande: **26.03.2003**
(21) Numéro de dépôt: 02292250.4
(22) Date de dépôt: 13.09.2002
(51) Int. Cl.: B23C 3/00, B23C 5/12

(54) **Procédé de fabrication d'une culasse de moteur diesel**

(30) Priorité: 25.09.2001 FR 0112306
(71) Demandeur: Renault s.a.s., 92100 Boulogne Billancourt (FR)
(72) Inventeur: Gallard, Patrick, 92360 Meudon la Foret (FR)

(57) **Abrégé**

L'invention propose un procédé de fabrication d'une culasse (22) de moteur thermique diesel qui comporte au moins une chambre (10) de combustion sensiblement concave dans laquelle débouchent au moins un siège (14) d'une soupape d'admission et au moins un siège (16) d'une soupape d'échappement, du type qui comporte au moins un première étape au cours de laquelle la chambre (10) de combustion concave est obtenue par coulée autour d'un noyau convexe faisant partie du moule de la culasse (22), caractérisé en ce qu'il comporte une deuxième étape au cours de laquelle la chambre de combustion (10) est fraisée pour délimiter un volume concave de forme déterminée et précise.

## Description

L'invention concerne un procédé de fabrication d'une culasse de moteur thermique diesel.

L'invention concerne plus particulièrement un procédé de fabrication d'une culasse de moteur thermique diesel qui comporte au moins une chambre de combustion sensiblement concave dans laquelle débouchent au moins un siège d'une soupape d'admission et au moins un siège d'une soupape d'échappement, du type qui comporte au moins un première étape au cours de laquelle la chambre de combustion concave est obtenue par coulée autour d'un noyau convexe faisant partie du moule de la culasse.

On connaît de nombreux exemples de culasses de moteur thermique diesel.

Selon une conception connue de longue date, on a proposé de réaliser des culasses de moteur thermique diesel qui comportent des chambres de combustion concaves, notamment hémisphériques, par le seul procédé de moulage. Ces chambres de combustion présentent des formes favorables au remplissage et à l'évacuation des gaz puisqu'elles permettent l'implantation de soupapes inclinées par rapport à la direction axiale générale de la chambre de combustion et du cylindre associé. Toutefois, les dispersions dimensionnelles résultant du moulage en fonderie ne permettent pas de respecter le taux de compression voulu. De ce fait, de telles chambres sont inadaptées à la réalisation d'un moteur diesel faiblement polluant.

Pour remédier à cet inconvénient, on a proposé, selon une autre conception connue, de réaliser des culasses de moteur diesel comportant des chambres de combustion sensiblement planes. De telles chambres de combustion peuvent être usinées par fraisage puis rectifiées, et à ce titre, elles présentent des cotes connues qui permettent de respecter le taux de compression voulu lors de la conception du moteur.

Toutefois elles imposent une implantation des soupapes parallèlement à la direction axiale générale du cylindre associé, et, de ce fait, elles pénalisent sensiblement le remplissage et l'évacuation des gaz.

Pour remédier à ces inconvénients, l'invention propose un procédé de fabrication permettant d'obtenir une chambre de combustion à la fois concave et usinée, qui permet un bon remplissage des gaz et une bonne évacuation des gaz.

Dans ce but, l'invention propose un procédé de fabrication du type décrit précédemment, caractérisé en ce qu'il comporte une deuxième étape au cours de laquelle la chambre de combustion est fraisée pour délimiter un volume concave de forme déterminée et précise.

Selon d'autres caractéristiques du procédé :
- la deuxième étape de fraisage met en oeuvre une fraise associée dont des arêtes de coupe sont perpendiculaires aux axes des sièges de soupapes,
- la deuxième étape de fraisage est une étape de fraisage cylindrique, au cours de laquelle l'axe de rotation de la fraise associée est orienté perpendiculairement puis déplacé parallèlement à l'axe de la chambre de combustion, et au cours de laquelle la chambre de combustion est usinée localement sous la forme d'une portion de cylindre par la fraise associée dont les arêtes sont perpendiculaires aux axes des sièges de soupapes,
- le procédé est associé à la fabrication d'une culasse dans la chambre de combustion de laquelle débouchent deux sièges de soupapes d'admission et deux sièges de soupapes d'échappement et en ce que, au cours de son déplacement parallèlement à l'axe de la chambre de combustion intervenant lors de la deuxième étape, l'axe de rotation de la fraise passe par l'intersection des axes des sièges des soupapes d'admission et d'échappement,
- la deuxième étape de fraisage est une étape de fraisage conique au cours de laquelle l'axe de rotation de la fraise (18) associée est orienté puis déplacé coaxialement à l'axe (A) de la chambre de combustion et au cours de laquelle la chambre de combustion est usinée sous la forme d'un cône par les arêtes de la fraise associée qui sont perpendiculaires aux axes des sièges de soupapes.

L'invention propose aussi une fraise pour la mise en oeuvre du procédé décrit précédemment, caractérisée en ce qu'elle comporte un unique jeu cylindrique d'arêtes de coupe, d'épaisseur constante, qui s'étendent radialement à intervalles angulaires réguliers à partir du corps cylindrique pour permettre l'enlèvement du matériau de la culasse perpendiculairement aux axes des sièges de soupape de la culasse lorsque l'axe de rotation de la fraise est déplacé parallèlement à l'axe de la chambre de combustion.

Selon d'autres caractéristiques de la fraise :
- la fraise comporte deux jeux tronconiques d'arêtes de coupe qui forment un angle déterminé avec les arêtes du jeu cylindrique,
- les arêtes de chaque jeu tronconique d'arêtes de coupe et du jeu cylindrique d'arêtes de coupe sont raccordées entre elles par un rayon de coupe déterminé.

L'invention propose aussi une fraise en variante pour la mise en oeuvre du procédé décrit précédemment, caractérisée en ce qu'elle comporte un unique jeu conique d'arêtes de coupe, de conicité élevée, dont les arêtes s'étendent à intervalles réguliers à partir du corps pour permettre l'enlèvement du matériau de la culasse perpendiculairement aux axes des sièges de soupape de la culasse lorsque l'axe de rotation de la fraise est déplacé coaxialement à l'axe de la chambre de combustion.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'une paroi supérieure d'une chambre de combustion concave obtenue selon une première variante de la deuxième étape de fraisage du procédé objet de l'invention ;
- la figure 2 est une vue de dessous de la chambre de combustion concave de la figure 1 ;
- la figure 3 est une vue en perspective de la fraise mise en oeuvre dans la première variante de la deuxième étape de fraisage du procédé objet de l'invention ;
- la figure 4 est une vue en coupe passant par l'axe de la chambre de combustion illustrant la première variante de la deuxième étape de fraisage du procédé objet de l'invention ;
- la figure 5 est une vue en perspective d'une fraise mise en oeuvre dans une deuxième variante de la deuxième étape de fraisage du procédé objet de l'invention ;
- la figure 6 est une vue en coupe passant par l'axe de la chambre de combustion illustrant la deuxième variante de la deuxième étape de fraisage du procédé objet de l'invention ; et
- la figure 7 est une vue en perspective d'une paroi supérieure d'une chambre de combustion concave obtenue selon la deuxième variante de la deuxième étape de fraisage du procédé objet de l'invention.

Dans la description qui va suivre, des chiffres de référence identiques désignent des éléments identiques.

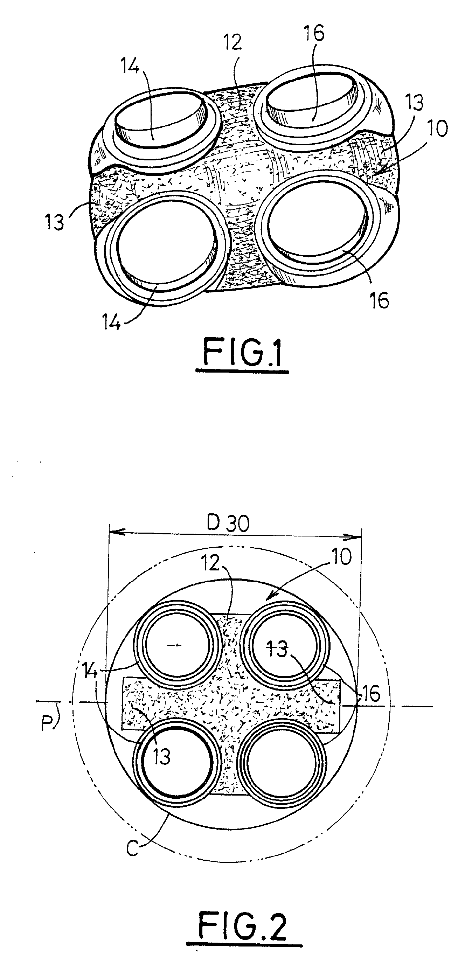

On a représenté aux figures 1, 2 et 7 une paroi supérieure 12 d'une chambre 10 de combustion concave d'une culasse de moteur thermique diesel.

De manière connue, la chambre 10 de combustion comporte au moins un siège 14 d'une soupape d'admission et au moins un siège 16 d'une soupape d'échappement qui débouchent dans la paroi supérieure 12.

Dans le mode de réalisation préféré de l'invention, la chambre 10 de combustion est associée à une culasse à quatre soupapes par cylindre qui comporte deux sièges 14 de soupapes d'admission et deux sièges 16 de soupapes d'échappement.

De manière connue, la chambre de combustion 10 est fabriquée selon un procédé de fabrication qui comporte au moins un première étape au cours de laquelle la chambre 10 de combustion concave est obtenue par coulée autour d'un noyau convexe (non représenté) faisant partie du moule (non représenté) de la culasse.

Conformément à l'invention, le procédé comporte une deuxième étape au cours de laquelle la chambre 10 de combustion est fraisée de manière que sa paroi supérieure 12 délimite un volume concave de forme déterminée et précise. Cette configuration permet notamment de disposer d'un moteur diesel dont les chambres présentent un taux de compression conforme au taux voulu lors de la conception du moteur.

Plus particulièrement, la deuxième étape de fraisage met en oeuvre une fraise 18 associée dont des arêtes 20 de coupe sont perpendiculaires aux axes des sièges de soupapes.

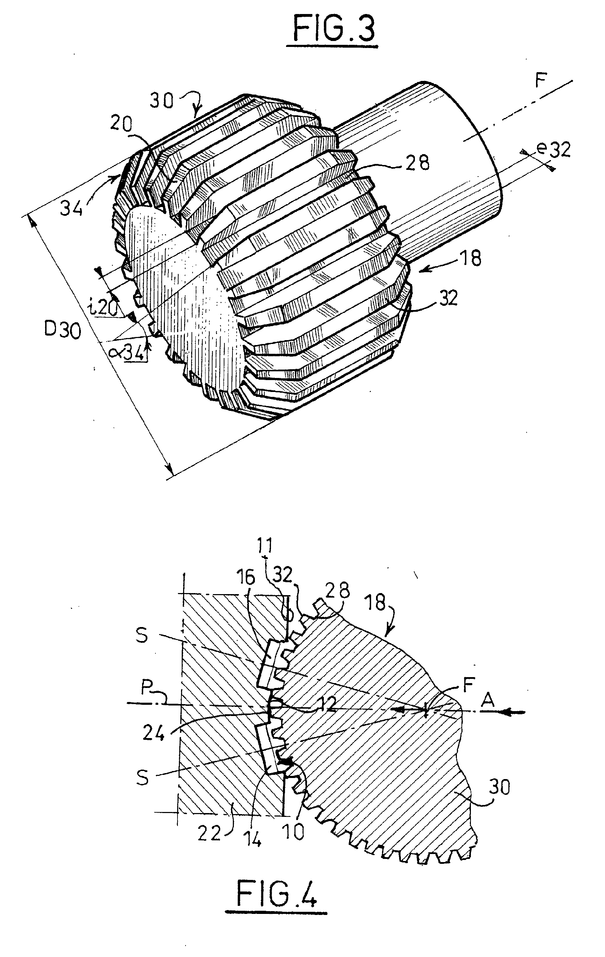

Ainsi, selon une première variante de la deuxième étape du procédé objet de l'invention, ladite deuxième étape de fraisage est une étape de fraisage cylindrique, représentée à la figure 4, au cours de laquelle l'axe "F" de rotation de la fraise 18 associée est orienté perpendiculairement à l'axe "A" de la chambre de combustion 10, par exemple en l'orientant parallèlement à une face inférieure 11 de la culasse, puis au cours de laquelle l'axe "F" de rotation de la fraise 18 est déplacé parallèlement à l'axe "A" de la chambre de combustion 10 de la culasse 22 comme l'indique la flèche, et au cours de laquelle la chambre de combustion 10 est usinée sous la forme d'une portion 24 de cylindre. La partie usinée de la chambre de combustion 10 correspondante est représentée en grisé sur la figure 2.

Au cours de la deuxième étape de fraisage cylindrique, de manière non limitative de l'invention, l'axe "F" de rotation de la fraise 18 passe par l'intersection des axes "S" des sièges 14, 16 des soupapes d'admission et d'échappement. Cette configuration permet avantageusement de proposer une chambre de combustion 10 présentant une forme régulière.

La figure 2 représente plus précisément la fraise 18 utilisée préférentiellement au cours de la première variante de la deuxième étape du procédé objet de l'invention.

La fraise 18 comporte un corps 28 sensiblement cylindrique et elle comporte plus particulièrement une partie 30 en forme de cylindre, comportant au moins un jeu cylindrique d'arêtes 32 de coupe, d'épaisseur constante "e₃₂", qui s'étendent sensiblement radialement à intervalles angulaires réguliers à partir de la périphérie du corps 28 cylindrique, pour permettre l'enlèvement du matériau de la culasse 22 perpendiculairement aux axes S des sièges 14, 16 de soupape lorsque l'axe de rotation F de la fraise 18 est déplacé parallèlement à l'axe A de la chambre 10 de combustion comme représenté à la figure 4.

Par ailleurs, la partie 30 cylindrique de la fraise est sensiblement du diamètre D₃₀ d'un cercle "C", représenté à la figure 2, qui est tangent extérieurement aux sièges 14, 16 de soupapes de la culasse à fabriquer. De la sorte, les sièges 14, 16 de soupape ne forment pas d'aspérité dans la chambre 10 de combustion, ce qui permet, lors du fonctionnement du moteur, de contribuer à un écoulement satisfaisant des gaz.

Dans le mode de réalisation préféré de l'invention, le corps 28 de la fraise 18 comporte aussi, de part et d'autre de la partie 30 cylindrique qui porte le jeu cylindrique d'arêtes 32 de coupe, deux parties 34 en forme de tronc de cône qui portent chacune un jeu tronconique d'arêtes de coupe 20.

Cette disposition n'est pas limitative de l'invention, et la fraise 18 pourrait ne comporter que la partie cylindrique 30 portant le jeu cylindrique d'arêtes de coupe 32.

Chaque jeu tronconique d'arêtes 20 de coupe s'étend radialement à partir du corps 28 à intervalles "i₂₀" réguliers. Ces arêtes 20 permettent l'enlèvement du matériau de la culasse aux extrémités 13 de la chambre de combustion 10 pour proposer une chambre de combustion 10 qui rejoint progressivement la face inférieure de la culasse, comme représenté aux figures 1 et 2.

Avantageusement, les arêtes 20 des jeux d'arêtes tronconiques prolongent les arêtes 32 du jeu d'arête cylindrique. Plus particulièrement, elle rejoignent les arêtes 32 dans chaque partie de plus grand diamètre de chaque partie 34 tronconique.

Les arêtes de coupe 20 forment un angle déterminé avec les arêtes 32 du jeu cylindrique. A cet effet, la partie 34 tronconique de la fraise 18 est notamment d'une conicité "α₃₄" déterminée.

De préférence, les arêtes 20 de chaque jeu tronconique d'arêtes de coupe et les arêtes 32 du jeu cylindrique d'arêtes de coupe sont raccordées entre elles par un rayon de coupe déterminé (non représenté) qui est agencé à la jonction des arêtes 20 et 32, ceci afin de ne pas réaliser d'arêtes vives à l'intérieur de la chambre de combustion 10, de manière à faciliter l'écoulement des gaz de combustion.

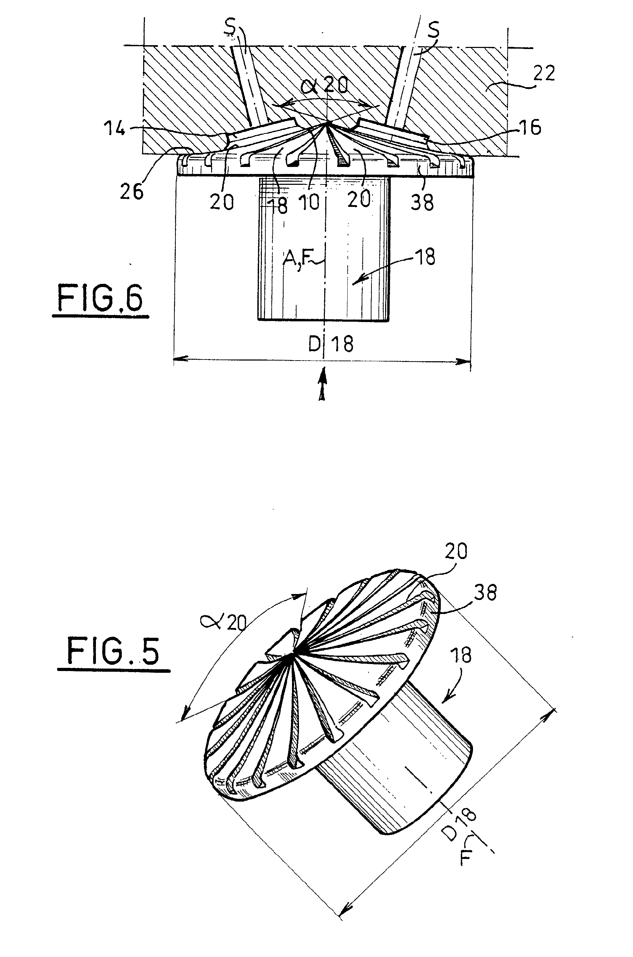

Selon une seconde variante de la deuxième étape du procédé objet de l'invention, qui est représentée à la figure 6, la deuxième étape de fraisage est une étape de fraisage conique au cours de laquelle l'axe "F" de rotation de la fraise 18 associée est orienté puis déplacé coaxialement à l'axe "A" de la chambre 10 de combustion de la culasse 22, comme l'illustre la flèche, et au cours de laquelle la chambre de combustion est usinée sous la forme d'un cône 26 par les arêtes 20 de la fraise 18 qui sont perpendiculaires aux axes "S" des sièges 14, 16 de soupapes.

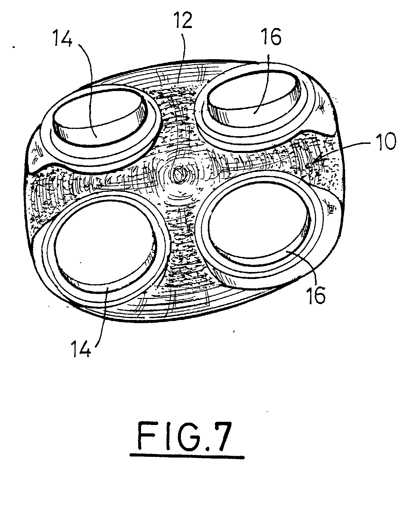

A cet effet, comme l'illustre la figure 5, la fraise 18 associée à cette seconde variante comporte un unique jeu conique d'arêtes 20 de coupe qui s'étendent à intervalles angulaires réguliers à partir du corps 38 de révolution de la fraise 18. Le jeu conique d'arêtes 20 de coupe est de conicité "α₂₀" élevée, pour permettre l'enlèvement du matériau de la culasse perpendiculairement aux axes "S" des sièges 14, 16 de soupape de la culasse lorsque l'axe "F" de rotation de la fraise est déplacé coaxialement à l'axe "A" de la chambre de combustion, comme représenté à la figure 7.

Contrairement à la précédente variante de la deuxième étape du procédé objet de l'invention, la fraise 18 est donc déplacée suivant la seule direction A.

Avantageusement, la fraise 18 est d'un diamètre D₁₈ maximum qui au moins égal à celui d'un cercle tangent extérieurement aux sièges 14, 16 de soupapes de la culasse à fabriquer. De la sorte, les sièges 14, 16 de soupape ne forment pas d'aspérité dans la chambre 10 de combustion, ce qui permet, lors du fonctionnement du moteur, de contribuer à un écoulement satisfaisant des gaz.

Enfin, il sera compris que le procédé est applicable à toute forme de chambre, notamment une chambre hémisphérique, pour la réalisation de laquelle une fraise sphérique ou hémisphérique sera avantageusement utilisée.

L'invention permet donc de réaliser une culasse 22 dont la chambre 10 de combustion présente un taux de compression réel conforme au taux de compression théorique voulu lors de la conception du moteur.

## Revendications

1. Procédé de fabrication d'une culasse (22) de moteur thermique diesel qui comporte au moins une chambre (10) de combustion sensiblement concave dans laquelle débouchent au moins un siège (14) d'une soupape d'admission et au moins un siège (16) d'une soupape d'échappement, du type qui comporte au moins un première étape au cours de laquelle la chambre (10) de combustion concave est obtenue par coulée autour d'un noyau convexe faisant partie du moule de la culasse (22),
**caractérisé en ce qu'**il comporte une deuxième étape au cours de laquelle la chambre (10) de combustion est fraisée pour délimiter un volume concave de forme déterminée et précise.

2. Procédé selon la revendication précédente, **caractérisé en ce que** la deuxième étape de fraisage met en oeuvre une fraise (18) associée dont des arêtes (20) de coupe sont perpendiculaires aux axes (S) des sièges (14, 16) de soupapes.

3. Procédé selon la revendication précédente, **caractérisé en ce que** la deuxième étape de fraisage est une étape de fraisage cylindrique, au cours de laquelle l'axe (F) de rotation de la fraise (18) associée est orienté perpendiculairement puis déplacé parallèlement à l'axe (A) de la chambre (10) de combustion, et au cours de laquelle la chambre (10) de combustion est usinée localement au moins sous la forme d'une portion (24) de cylindre par la fraise (18) associée dont les arêtes (32) sont perpendiculaires aux axes (S) des sièges (14, 16) de soupapes.

4. Procédé selon la revendication précédente, **caractérisé en ce qu'**il est associé à la fabrication d'une culasse (22) dans la chambre (10) de combustion de laquelle débouchent deux sièges (14) de soupapes d'admission et deux sièges (16) de soupapes d'échappement et **en ce que**, au cours de son déplacement parallèlement à l'axe (A) de la chambre (10) de combustion intervenant lors de la deuxième étape, l'axe (F) de rotation de la fraise (18) passe par l'intersection des axes (S) des sièges (14, 16) des soupapes d'admission et d'échappement.

5. Procédé selon la revendication 2, **caractérisé en ce que** la deuxième étape de fraisage est une étape de fraisage conique au cours de laquelle l'axe (F) de rotation de la fraise (18) associée est orienté puis déplacé coaxialement à l'axe (A) de la chambre de combustion et au cours de laquelle la chambre (10) de combustion est usinée sous la forme d'un cône (26) par les arêtes (20) de la fraise (18) associée qui sont perpendiculaires aux axes (S) des sièges (14, 16) de soupapes.

6. Fraise (18) pour la mise en oeuvre d'un procédé selon les revendications 2 à 4, **caractérisée en ce qu'**elle comporte un au moins un jeu cylindrique d'arêtes (32) de coupe, d'épaisseur (e₃₂) constante, qui s'étendent radialement à intervalles angulaires réguliers à partir du corps (28) cylindrique pour permettre l'enlèvement du matériau de la culasse (22) perpendiculairement aux axes (S) des sièges (14, 16) de soupape de la culasse lorsque l'axe (F) de rotation de la fraise est déplacé parallèlement à l'axe (A) de la chambre (10) de combustion.

7. Fraise (18) selon la revendication précédente, **caractérisé en ce qu'**elle comporte deux jeux tronconiques d'arêtes (20) de coupe qui forment un angle déterminé avec les arêtes (32) du jeu cylindrique.

8. Fraise (18) selon la revendication précédente, **caractérisé en ce que** les arêtes (20) de chaque jeu tronconique d'arêtes (20) de coupe et du jeu cylindrique d'arêtes (32) de coupe sont raccordées entre elles par un rayon de coupe déterminé.

9. Fraise (18) pour la mise en oeuvre d'un procédé selon la revendication 2 et 5 prises en combinaison, **caractérisée en ce qu'**elle comporte un unique jeu conique d'arêtes (20) de coupe, de conicité (α₂₀) élevée, dont les arêtes (20) s'étendent à intervalles réguliers à partir du corps (28) pour permettre l'enlèvement du matériau de la culasse (22) perpendiculairement aux axes (S) des sièges (14, 16) de soupape de la culasse (22) lorsque l'axe (F) de rotation de la fraise est déplacé coaxialement à l'axe (A) de la chambre (10) de combustion.
